# EUROPÄISCHE PATENTANMELDUNG

(11) **EP 2 439 107 A1**
(43) Veröffentlichungstag der Anmeldung: **11.04.2012**
(21) Anmeldenummer: 10187090.5
(22) Anmeldetag: 11.10.2010
(51) Int. Cl.: B60R 1/074

(54) **Hybrid-Außenrückblickspiegelanordnung**

(71) Anmelder: SMR Patents S.à.r.l., 1653 Luxembourg (LU)
(72) Erfinder: Hein, Peter, 73770, Denkendorf (DE); Serve, Gregor, 71522, Backnang (DE)
(74) Vertreter: Weber-Bruls, Dorothée

(57) **Zusammenfassung**

Es wird eine Hybrid-Außenrückblickspiegelanordnung (01) für Kraftfahrzeuge beschrieben, welche einen Spiegelfuß (02) und einen Außenrückblickspiegel (03) umfasst. Der Spiegelfuß (02) und der Außenrückblickspiegel (03) sind gelenkig miteinander verbunden, so dass der Außenrückblickspiegel (03) gegenüber dem Spiegelfuß (02) aus einer Betriebsstellung in eine Anklappstellung und umgekehrt um eine Gelenkachse (04) verschwenkbar ist. Die Hybrid-Außenrückblickspiegelanordnung (01) erlaubt unter Verwendung ein und desselben Spiegelfußes (02) entweder ein handbetriebenes oder ein elektromotorisch betriebenes Verschwenken des Außenrückblickspiegels (03) gegenüber dem Spiegelfuß (02) um die Gelenkachse (04) vorzusehen. Hierzu weist der Spiegelfuß (02) Mittel (17) zur Aufnahme wahlweise einer die Gelenkachse (04) bildenden Achse (18) oder eines die Gelenkachse (04) umfassenden Verschwenkantriebs (19) auf, wobei die Achse (18) bei einem handbetriebenen Verschwenken und der Verschwenkantrieb (19) bei einem elektromotorisch betriebenen Verschwenken vorgesehen ist.

## Beschreibung

Die Erfindung betrifft eine Hybrid-Außenrückblickspiegelanordnung für Kraftfahrzeuge gemäß dem Oberbegriff des Anspruchs 1.

Eine Außenrückblickspiegelanordnung für ein Kraftfahrzeug besteht beispielsweise aus einem an dem Kraftfahrzeug angeordneten Spiegelfuß, welcher mittels einer Spiegelfußabdeckung verkleidet sein kann, und einem an dem Spiegelfuß angeordneten Außenrückblickspiegel. Der Außenrückblickspiegel umfasst ein Außenrückblickspiegelgehäuse, welches unter anderem einen dem Spiegelfuß zugeordneten Grundträger beherbergt.

Spiegelfuß und Grundträger sind gelenkig miteinander verbunden, so dass der Außenrückblickspiegel gegenüber dem Spiegelfuß aus einer Betriebsstellung in eine Anklappstellung und umgekehrt um eine Gelenkachse verschwenkbar ist. Spiegelfuß und Grundträger können als Druckgussteile beispielsweise aus dem selben Werkstoff hergestellt sein.

Die gelenkige Verbindung besteht im Wesentlichen aus einem die Gelenkachse bildenden Zapfen und je einer den Zapfen umgebenden Gelenkpfanne am Spiegelfuß und am Grundträger. Der Zapfen ist einseitig mit dem Spiegelfuß oder mit dem Grundträger einstückig verbunden und steht mittig auf der Gelenkpfanne des Spiegelfußes oder des Grundträgers auf. An der Gelenkpfanne des jeweils gegenüberliegenden Bauteils ist mittig eine Lageröffnung für das freie Ende des Zapfens vorgesehen. Die Lageröffnung bildet eine Aufnahme für eine dem Zapfen zugeordnete Lagerbuchse, oder bildet selbst die Lagerbuchse, welche den Zapfen führt.

Das Verschwenken des Außenrückblickspiegels gegenüber dem Spiegelfuß aus der Betriebsstellung in die Anklappstellung und umgekehrt um die Gelenkachse kann je nach Ausstattung eines Kraftfahrzeugs handbetrieben oder elektromotorisch betrieben erfolgen. Beispielsweise kann es vorkommen, dass bei einer ersten Außenrückblickspiegelanordnung für ein erstes Kraftfahrzeug ein handbetriebenes Verschwenken und bei einer zweiten Außenrückblickspiegelanordnung für ein zweites Kraftfahrzeug der selben Baureihe wie das erste Kraftfahrzeug ein elektromotorisch betriebenes Verschwenken vorgesehen ist.

Unabhängig davon, ob ein handbetriebenes oder ein elektromotorisch betriebenes Verschwenken vorgesehen ist, muss ein Beiklappen des Außenrückblickspiegels bei äußerer Krafteinwirkung sichergestellt werden. Das Beiklappen kann hierbei sowohl in, als auch entgegen der Fahrtrichtung des Kraftfahrzeugs erfolgen. Zu einer äußeren Krafteinwirkung kann es beispielsweise durch einen Kontakt mit einem anderen Verkehrsteilnehmer oder mit einem Objekt kommen.

Um einen Außenrückblickspiegel gegenüber einem Spiegelfuß in Betriebsstellung zu halten und gleichzeitig ein Beiklappen bei äußerer Krafteinwirkung sicherzustellen, ist durch EP 0 551 607 A1 eine Außenrückblickspiegelanordnung für ein Kraftfahrzeug mit einem Rastkörper bekannt. Die Außenrückblickspiegelanordnung umfasst einen an einem Spiegelfuß um eine Gelenkachse verschwenkbar angeordneten Außenrückblickspiegel. Die Achse eines den Spiegelfuß mit dem Außenrückblickspiegel verbindenden Hohlniets bildet die Gelenkachse. Zwischen Spiegelfuß und Außenrückblickspiegel ist ein vom Hohlniet durchsetzter Rastkörper eingefangen. Der Rastkörper ist Teil einer lösbaren, durch äußere Krafteinwirkung überwindbaren Rasterung, welche den Außenrückblickspiegel wenigstens in der Betriebsstellung hält. Die Rasterung besteht aus an einer Stirnseite des Rastkörpers sowie am benachbarten Teil des Spiegelfußes oder des Außenrückblickspiegels lösbar ineinander greifenden Rasterelementen. Der Rastkörper ist mit einer axial in Richtung des Rasterelementeingriffs wirkenden Feder beaufschlagt. Die Feder kann in dem Hohlniet eingefangen sein.

Zur Verwirklichung eines handbetriebenen oder eines elektromotorisch betriebenen Verschwenkens des Außenrückblickspiegels gegenüber dem Spiegelfuß um die Gelenkachse sind bislang mit Ausnahme weniger Speziallösungen unterschiedlich ausgestaltete Spiegelfüße und Grundträger vorgesehen, verbunden mit hohem Entwicklungs-, Montage- und Kostenaufwand. Darüber hinaus ergibt sich hierdurch eine entsprechende Verwechslungsgefahr der einzelnen Bauteile beim Zusammenbau, verbunden mit kostspieligen und zeitaufwändigen Nachbesserungen.

Durch WO 2009/035931 ist eine solche Speziallösung in Form einer Hybrid-Außenrückblickspiegelanordnung für ein Kraftfahrzeug mit einem mittels eines Grundträgers an einem Spiegelfuß angeordneten Außenrückblickspiegel bekannt. Der Spiegelfuß und der Grundträger sind gelenkig miteinander verbunden, so dass der Außenrückblickspiegel gegenüber dem Spiegelfuß aus einer Betriebsstellung in eine Anklappstellung und umgekehrt um eine Gelenkachse verschwenkbar ist. Der Spiegelfuß verfügt über eine Gelenkpfanne, in deren Mitte ein fest und unverdrehbar einstückig mit dem Spiegelfuß verbundener Zapfen angeordnet ist, der die Gelenkachse bildet. Der in einem Außenrückblickspiegelgehäuse beherbergte Grundträger verfügt ebenfalls über eine Gelenkpfanne, in deren Mitte eine dem Zapfen zugeordnete Lageröffnung angeordnet ist. Die Hybrid-Außenrückblickspiegelanordnung zeichnet sich dadurch aus, dass unter Verwendung ein und desselben Spiegelfußes und ein und desselben Grundträgers entweder ein handbetriebenes oder ein elektromotorisch betriebenes Verschwenken um die Gelenkachse vorgesehen sein kann. Hierzu ist die Außenrückblickspiegelanordnung grundsätzlich für ein handbetriebenes Verschwenken ausgeführt, in die ein Elektromotor integriert werden kann, der mittels eines Untersetzungsgetriebes auf einen am benachbarten Teil des Spiegelfußes oder des Außenrückblickspiegels zu integrierenden Zahnkranz einwirkt. An der Gelenkpfanne des Grundträgers sind umlaufend um die Lageröffnung Vertiefungen angeordnet, welche mit Fortsätzen eines wahlweise zwischen die Gelenkpfannen von Grundträger und Spiegelfuß einsetzbaren Zahnkranzes korrespondieren. Durch die korrespondierenden Vertiefungen und Fortsätze ist der zwischen den Gelenkpfannen des Spiegelfußes und des Grundträgers eingefangene Zahnkranz unverdrehbar gegenüber dem Grundträger. Ein Ritzel des wahlweise am Spiegelfuß anordbaren Elektromotors greift in die Zähne des Zahnkranzes ein, so dass der Grundträger durch den Elektromotor gegenüber dem Spiegelfuß elektromotorisch betrieben verschwenkt werden kann. Ein ausschließlich handbetriebenes Verschwenken des Grundträgers gegenüber dem Spiegelfuß wird durch Weglassung von Zahnkranz und Elektromotor verwirklicht.

Nachteilig hieran ist die komplizierte Herstellung des Spiegelfußes und des Grundträgers, in welche der Elektromotor, der Zahnkranz sowie gegebenenfalls ein Untersetzungsgetriebe integriert werden können müssen. Darüber hinaus muss der Elektromotor ein hohes Drehmoment aufbringen, um wenigstens eine Rasterung zu überwinden, welche den Außenrückblickspiegel bei dem grundsätzlich vorgesehenen handbetriebenem Verschwenken wenigstens in der Betriebsstellung hält.

Durch EP 1 755 923 B1 ist ein Verschwenkantrieb für eine

Außenrückblickspiegelanordnung eines Kraftfahrzeugs bekannt. Der Verschwenkantrieb umfasst ein erstes Teil, der um eine Gelenkachse verschwenkbar mit einem zweiten Teil verbunden ist. Der Verschwenkantrieb umfasst darüber hinaus einen elektrischen Antrieb zum elektromotorisch betätigten Verschwenken der Teile relativ zueinander. Der Verschwenkantrieb umfasst außerdem eine Kupplung zwischen dem ersten und dem zweiten Teil. Bei äußerer Krafteinwirkung hebt die Kupplung eine zum elektromotorisch betätigten Verschwenken der beiden Teile relativ zueinander erforderliche drehmomentschlüssige Kopplung des elektrischen Antriebs mit den beiden Teilen auf, so dass die beiden Teile handbetrieben verschwenkt werden können. Bei erneutem elektromotorischen Antrieb stellt die Kupplung die drehmomentschlüssige Kopplung wieder her, so dass die beiden Teile wieder elektromotorisch betrieben verschwenkt werden können. Die Kupplung stellt so ein Beiklappen eines Außenrückblickspiegels in und entgegen der Fahrtrichtung eines Kraftfahrzeugs durch äußere Krafteinwirkung sicher, ohne den elektrischen Antrieb zu beschädigen.

Ein Ziel bei der Entwicklung und Herstellung von Kraftfahrzeugteilen, wie etwa von Außenrückblickspiegelanordnungen mit wahlweise handbetriebenem oder elektromotorisch betriebenem Verschwenken des Außenrückblickspiegels gegenüber dem Spiegelfuß um die Gelenkachse, ist eine einfache, zeitsparende und kostengünstige Herstellung und Montage.

Außenrückblickspiegelanordnungen oder Außenrückblickspiegel mit einer Vielzahl von je nach Ausführungsart verschiedenen Bauteilen, wie z.B. unterschiedlichen Spiegelfüßen und/oder Grundträgern für ein handbetriebenes oder elektromotorisch betriebenes Verschwenken, stehen diesem Ziel entgegen.

Eine Aufgabe der Erfindung ist die Schaffung einer verbesserten Außenrückblickspiegelanordnung für Kraftfahrzeuge, welche unter Verwirklichung wahlweise eines handbetriebenen oder ein elektromotorisch betriebenen Verschwenkens des Außenrückblickspiegels gegenüber dem Spiegelfuß um die Gelenkachse eine einfache und kostengünstige Herstellung und Montage zulässt.

Die Aufgabe wird gelöst durch die Merkmale des unabhängigen Anspruchs 1.

Demnach ist eine Hybrid-Außenrückblickspiegelanordnung für Kraftfahrzeuge vorgesehen, welche einen Spiegelfuß und einen Außenrückblickspiegel umfasst. Der Spiegelfuß ist zur Befestigung am Kraftfahrzeug vorgesehen. Der Außenrückblickspiegel ist um eine Gelenkachse verschwenkbar am Spiegelfuß angeordnet. Hierzu sind der Spiegelfuß und der Außenrückblickspiegel gelenkig miteinander verbunden, so dass der Außenrückblickspiegel gegenüber dem Spiegelfuß aus einer Betriebsstellung in eine Anklappstellung und umgekehrt um die Gelenkachse verschwenkbar ist. Der Außenrückblickspiegel kann ein Außenrückblickspiegelgehäuse umfassen, welches unter anderem einen dem Spiegelfuß zugeordneten Grundträger beherbergen kann. Der Spiegelfuß verfügt vorzugsweise über eine Gelenkpfanne. Ebenso verfügt der Außenrückblickspiegel, beispielsweise dessen Grundträger, vorzugsweise über eine der Gelenkpfanne des Spiegelfußes zugeordnete Gelenkpfanne. Die Gelenkachse steht senkrecht auf den beiden Gelenkpfannen auf. Die Hybrid-Außenrückblickspiegelanordnung erlaubt unter Verwendung ein und desselben Spiegelfußes entweder
- ein handbetriebenes oder
- ein elektromotorisch betriebenes

Verschwenken des Außenrückblickspiegels um die Gelenkachse vorzusehen. Hierzu weist zumindest der Spiegelfuß Mittel zur Aufnahme wahlweise einer die Gelenkachse bildenden Achse oder eines die Gelenkachse umfassenden Verschwenkantriebs auf. Dabei ist die Achse für ein handbetriebenes Verschwenken bzw. bei einem handbetriebenen Verschwenken vorgesehen und der Verschwenkantrieb für ein elektromotorisch betriebenes Verschwenken bzw. bei einem elektromotorisch betriebenen Verschwenken.

In einem Ausgangszustand ist zumindest der Spiegelfuß hierbei weder grundsätzlich für ein handbetriebenes Verschwenken, noch grundsätzlich für ein elektromotorisch betriebenes Verschwenken des Außenrückblickspiegels um die Gelenkachse ausgelegt. Die Gelenkachse wird erst mit der Auswahl der Verbindung von Spiegelfuß und Außenrückblickspiegel festgelegt. Diese Auswahl wird durch die Wahl eines handbetriebenen oder eines elektromotorisch betriebenen Verschwenkens von Spiegelfuß und Außenrückblickspiegel relativ zueinander getroffen, wobei die entsprechende Verbindung zum Außenrückblickspiegel mittels der Achse oder mittels des Verschwenkantriebs gewählt wird. Die Auswahl der Verbindung kann beispielsweise auch die Wahl unterschiedlicher Grundträger des Außenrückblickspiegels betreffen.

Die Festlegung der Gelenkachse erst mit Auswahl der Verbindung bedeutet jedoch weder, dass es sich um unterschiedliche Lagen und Raumpositionen der Gelenkachse handeln muss, abhängig davon, ob ein handbetriebenes oder ein elektromotorisch betriebenes Verschwenken vorgesehen ist, noch dass eine Einschränkung dahingehend besteht, dass die Gelenkachse bei Auswahl des handbetriebenen Verschwenkens identisch sein muss mit der Gelenkachse bei Auswahl des elektromotorisch betriebenen Verschwenkens.

Im Ausgangszustand, in dem weder die Achse, noch der Verschwenkantrieb angeordnet sind, sind der Spiegelfuß und der Außenrückblickspiegel nicht lagerartig geführt miteinander verbunden. Erst die Anordnung der Achse oder des Verschwenkantriebs am Spiegelfuß stellt eine die Gelenkachse umfassende Verbindung zwischen Spiegelfuß und Außenrückblickspiegel her. Somit wird erst durch eine Nichtverwendung des Verschwenkantriebs und die Verwendung der Achse ein handbetriebenes Verschwenken verwirklicht, wohingegen durch Nichtverwendung der Achse und Verwendung des Verschwenkantriebs ein elektromotorisch betriebenes Verschwenken verwirklicht wird.

Die Mittel zur wahlweisen Aufnahme der die Gelenkachse bildenden Achse am Spiegelfuß umfassen vorzugsweise eine beispielsweise in einer Gelenkpfanne des Spiegelfußes angeordnete zentrale Lageröffnung für die Achse. Der Außenrückblickspiegel weist vorzugsweise ebenfalls eine Lageröffnung für die Achse auf. Diese Lageröffnung am Außenrückblickspiegel kann an zentral an einer Gelenkpfanne des Außenrückblickspiegels vorgesehen sein. Die bei handbetriebenem Verschwenken vorgesehene Achse durchsetzt die beiden Lageröffnungen am Spiegelfuß und am Außenrückblickspiegel. Die Achse ist vorzugsweise am Außenrückblickspiegel und/oder am Spiegelfuß um die Gelenkachse verdrehbar angeordnet.

Besonders vorteilhaft kann der Außenrückblickspiegel einen Grundträger umfassen.

Umfasst der Außenrückblickspiegel einen Grundträger, so kann bei einem handbetriebenen Verschwenken ein erster Grundträger vorgesehen sein, der über Mittel verfügt, um eine die Gelenkachse bildende Achse aufzunehmen. Bei einem elektromotorisch betriebenen Verschwenken kann ein zweiter Grundträger vorgesehen sein, der über Mittel verfügt, um einen die Gelenkachse umfassenden Verschwenkantrieb aufzunehmen. Der erste und der zweite Grundträger unterscheiden sich hierbei durch die unterschiedlichen Mittel zur Aufnahme der Achse bzw. des Verschwenkantriebs. Dabei sind der erste Grundträger und die Achse bei einem handbetriebenen Verschwenken und der zweite Grundträger und der Verschwenkantrieb bei einem elektromotorisch betriebenen Verschwenken vorgesehen.

Alternativ ist denkbar, dass wenn der Außenrückblickspiegel einen Grundträger umfasst, dieser genau wie der Spiegelfuß erlaubt, unter Verwendung ein und desselben Grundträgers entweder
- ein handbetriebenes oder
- ein elektromotorisch betriebenes

Verschwenken des Außenrückblickspiegels um die Gelenkachse vorzusehen. Hierzu weist ein solcher Grundträger Mittel zur Aufnahme wahlweise einer die Gelenkachse bildenden Achse oder eines die Gelenkachse umfassenden Verschwenkantriebs auf. Dabei ist die Achse für ein handbetriebenes Verschwenken bzw. bei einem handbetriebenen Verschwenken vorgesehen und der Verschwenkantrieb für ein elektromotorisch betriebenes Verschwenken bzw. bei einem elektromotorisch betriebenen Verschwenken.

Umfasst der Außenrückblickspiegel einen Grundträger, so können die Mittel zur Aufnahme der die Gelenkachse bildenden Achse am Grundträger eine beispielsweise in einer am Grundträger vorgesehenen Gelenkpfanne angeordnete zentrale Lageröffnung umfassen. Die bei handbetriebenem Verschwenken vorgesehene Achse durchsetzt die beispielsweise in der Gelenkpfanne vorgesehene zentrale Lageröffnung des Grundträgers sowie vorzugsweise eine beispielsweise ebenfalls zentral in einer Gelenkpfanne vorgesehene Lageröffnung am Spiegelfuß. Die Achse durchsetzt so die beiden beispielsweise in den Gelenkpfannen vorgesehenen zentralen Lageröffnungen des Spiegelfußes und des Grundträgers.

Die zentrale Lageröffnung kann hierbei bei einem ersten Grundträger vorgesehen sein, welcher ebenso wie die Achse vorgesehen ist, um ein handbetriebenes Verschwenken zu verwirklichen, und der sich von einem zweiten Grundträger unterscheidet, der ebenso wie ein Verschwenkantrieb vorgesehen ist, um ein elektromotorisch betriebenes Verschwenken zu verwirklichen. Alternativ kann die zentrale Lageröffnung bei einem Grundträger vorgesehen sein, welcher unter Verwendung ein und desselben Grundträgers entweder ein handbetriebenes oder ein elektromotorisch betriebenes Verschwenken des Außenrückblickspiegels um die Gelenkachse vorzusehen erlaubt.

Der Verschwenkantrieb umfasst vorzugsweise einen ersten Teil, der um die Gelenkachse verschwenkbar mit einem zweiten Teil verbunden ist. Der Verschwenkantrieb umfasst außerdem einen elektrischen Antrieb zum elektromotorisch betriebenen Verschwenken der Teile relativ zueinander um die Gelenkachse. Der erste Teil des Verschwenkantriebs kann am Spiegelfuß, der zweite Teil am Grundträger aufgenommen sein.

Die Mittel zur wahlweisen Aufnahme des die Gelenkachse umfassenden Verschwenkantriebs am Spiegelfuß umfassen vorzugsweise wenigstens eine in der Gelenkpfanne des Spiegelfußes angeordnete Ausnehmung mit Mitteln zur Befestigung wenigstens einer Partie des Verschwenkantriebs in der Ausnehmung. Umfasst der Außenrückblickspiegel einen Grundträger, so können die Gelenkpfanne, die wenigstens eine in der Gelenkpfanne des Spiegelfußes angeordnete Ausnehmung sowie die Mittel zur Befestigung wenigstens einer Partie des Verschwenkantriebs in der Ausnehmung am Grundträger vorgesehen sein.

Die Ausnehmung sowie die Mittel zur Befestigung wenigstens einer Partie des Verschwenkantriebs in der Ausnehmung können hierbei bei einem zweiten Grundträger vorgesehen sein, welcher ebenso wie der Verschwenkantrieb vorgesehen ist, um ein elektromotorisch betriebenes Verschwenken zu verwirklichen, und der sich von einem ersten Grundträger unterscheidet, der ebenso wie eine Achse vorgesehen ist, um ein handbetriebenes Verschwenken zu verwirklichen. Alternativ können die Ausnehmung sowie die Mittel zur Befestigung wenigstens einer Partie des Verschwenkantriebs in der Ausnehmung bei einem Grundträger vorgesehen sein, welcher unter Verwendung ein und desselben Grundträgers entweder ein handbetriebenes oder ein elektromotorisch betriebenes Verschwenken des Außenrückblickspiegels um die Gelenkachse vorzusehen erlaubt.

Bei der Partie des Verschwenkantriebs handelt es sich bevorzugt um wenigstens eine Partie eines ersten Teils eines wie zuvor beschrieben aufgebauten Verschwenkantriebs.

Die Mittel zur Befestigung wenigstens einer Partie vorzugsweise eines ersten Teils des Verschwenkantriebs in der Ausnehmung können eine Rastverbindung umfassen. Eine auch als Klipsverbindung oder als Schnappverbindungen ausgebildete Rastverbindung umfasst korrespondierende Rastelemente, von denen wenigstens eines elastisch verformbar ist und bei der Herstellung der Rastverbindung im Anschluss an eine Verformung mit mindestens einem anderen lösbar oder unlösbar verhakt. Beispiele für derart korrespondierende Rastelemente sind ein elastisch verformbares Rastmittel und eine Hintergreifung. Beispielsweise kann die Rastverbindung durch Einführen der wenigstens einen Partie des ersten Teils des Verschwenkantriebs in die zugehörige Ausnehmung gefolgt von einem Verdrehen des ersten Teils um die Gelenkachse hergestellt werden. Alternativ oder zusätzlich kann eine Schraub-, Klebe- oder sonst wie geeignete Verbindung vorgesehen sein, um die Rastverbindung zwischen dem ersten Teil des Verschwenkantriebs und dem Spiegelfuß zu sichern oder um den ersten Teil des Verschwenkantriebs am Spiegelfuß zu befestigen.

Wichtig ist hervorzuheben, dass sofern am Spiegelfuß und am Außenrückblickspiegel Gelenkpfannen vorgesehen sind, der am Außenrückblickspiegel befestigte zweite Teil des Verschwenkantriebs die der Gelenkpfanne des Spiegelfußes zugeordnete Gelenkpfanne des Außenrückblickspiegels umfassen kann.

Insbesondere wenn der Außenrückblickspiegel einen Grundträger umfasst, der erlaubt, unter Verwendung ein und desselben Grundträgers entweder ein handbetriebenes oder ein elektromotorisch betriebenes Verschwenken des Außenrückblickspiegels um die Gelenkachse vorzusehen, können die Mittel zur wahlweisen Aufnahme des die Gelenkachse umfassenden Verschwenkantriebs am Grundträger vorzugsweise mindestens eine beispielsweise in einer Gelenkpfanne des Grundträgers angeordnete Durchführungsöffnung umfassen. Eine die Gelenkachse bildende Welle des bei einem elektromotorisch betriebenen Verschwenken vorgesehenen Verschwenkantriebs führt durch die Durchführungsöffnung durch die Gelenkpfanne des Grundträgers hindurch. Auf der dem Spiegelfuß abgewandten Seite der Gelenkpfanne des Grundträgers können darüber hinaus Mittel zur Befestigung des zweiten Teils des Verschwenkantriebs am Grundträger vorgesehen sein. Die für den Verschwenkantrieb vorgesehene mindestens eine Durchführungsöffnung kann identisch mit einer zentralen Lageröffnung sein, diese umfassen oder von dieser umfasst werden, welche zentrale Lageröffnung für eine Achse vorgesehenen ist, die für ein handbetriebenes Verschwenken benötigt wird.

Der Verschwenkantrieb kann darüber hinaus eine Kupplung zwischen dem ersten und dem zweiten Teil umfassen. Bei äußerer Krafteinwirkung hebt die Kupplung eine zum elektromotorisch betätigten Verschwenken der beiden Teile relativ zueinander erforderliche drehmomentschlüssige Kopplung des elektrischen Antriebs mit den beiden Teilen auf, so dass die beiden Teile handbetrieben verschwenkt werden können. Das Aufheben der drehmomentschlüssigen Kopplung des elektrischen Antriebs mit den beiden Teilen kann beispielsweise dadurch erfolgen, dass die drehmomentschlüssige Kopplung des elektrischen Antriebs zu einem der beiden Teile aufgehoben wird, beispielsweise vermittels einer Rutschkupplung. Bei erneutem elektromotorischen Antrieb stellt die Kupplung die drehmomentschlüssige Kopplung wieder her, so dass die beiden Teile wieder elektromotorisch betrieben verschwenkt werden können. Die Kupplung stellt so ein Beiklappen eines Außenrückblickspiegels in und entgegen der Fahrtrichtung eines Kraftfahrzeugs durch äußere Krafteinwirkung sicher, ohne den elektrischen Antrieb zu beschädigen.

Die für das handbetriebene Verschwenken vorgesehene und hierbei die Gelenkachse bildende Achse kann beispielsweise einen Hohlniet umfassen.

Der Hohlniet kann federbelastet sein, beispielsweise um gegebenenfalls in Zusammenwirken mit z.B. an oder in den Gelenkpfannen vorgesehenen Rasterelementen eine Rasterung zu bilden, welche den Außenrückblickspiegel wenigstens in der Betriebsstellung hält. Die Federbelastung kann durch Beaufschlagung mit einer axial in Richtung des Rasterelementeingriffs wirkenden Feder hergestellt sein. Die Feder kann in dem Hohlniet eingefangen sein.

Der Spiegelfuß und/oder der Außenrückblickspiegel können darüber hinaus über korrespondierende Anschläge verfügen, welche zumindest eine, vorzugsweise jedoch zwei Endstellungen bei einem Verschwenken des Außenrückblickspiegels gegenüber dem Spiegelfuß definieren. Die Anschläge können beispielsweise an oder in einander zugeordneten Gelenkpfannen des Spiegelfußes und des Außenrückblickspiegels vorgesehen sein. Die Gelenkpfanne des Außenrückblickspiegels kann an einem gegebenenfalls vorgesehenen Grundträger des Außenrückblickspiegels vorgesehen sein. Die Endstellungen entsprechend vorzugsweise einer Betriebsstellung und einer Anklappstellung des beispielsweise ein einen Grundträger beherbergendes Außenrückblickspiegelgehäuse umfassenden Außenrückblickspiegels gegenüber dem Spiegelfuß. Alternativ können die Anschläge eine vordere Beiklappstellung entgegen der Fahrtrichtung und eine vorzugsweise der Anklappstellung entsprechende hintere Beiklappstellung in Fahrtrichtung definieren.

Es ist ersichtlich, dass die Erfindung auch durch einen Hybrid-Spiegelfuß verwirklicht werden kann, der sowohl für ein handbetriebenes Verschwenken, als auch für ein elektromotorisch betriebenes Verschwenken eines um eine Gelenkachse verschwenkbar an diesem angeordneten Außenrückblickspiegels einer Außenrückblickspiegelanordnung vorgesehen sein kann. Der am Kraftfahrzeug zu montierende Spiegelfuß verfügt über Mittel zur Aufnahme wahlweise einer die Gelenkachse bildenden Achse oder eines die Gelenkachse umfassenden Verschwenkantriebs. Vorzugsweise verfügt der am Kraftfahrzeug zu montierende Spiegelfuß über eine Gelenkpfanne, welche die Mittel zur Aufnahme wahlweise einer die Gelenkachse bildenden Achse oder eines die Gelenkachse umfassenden Verschwenkantriebs aufweisen kann. Die Mittel zur wahlweisen Aufnahme der Achse umfassen hierbei vorzugsweise eine zentrale Lageröffnung für die Achse in der Gelenkpfanne. Die Mittel zur wahlweisen Aufnahme des die Gelenkachse umfassenden Verschwenkantriebs am Spiegelfuß umfassen vorzugsweise wenigstens eine in der Gelenkpfanne des Spiegelfußes angeordnete Ausnehmung mit Mitteln zur Befestigung wenigstens einer Partie beispielsweise eines ersten Teils des Verschwenkantriebs in der Ausnehmung. Der Verschwenkantrieb ist vorzugsweise wie zuvor bereits ausführlich beschrieben ausgeführt.

Darüber hinaus kann der Spiegelfuß ein oder mehrere der zuvor zur Außenrückblickspiegelanordnung ausführlich beschriebenen Merkmale aufweisen.

Vorteile der Erfindung ergeben sich unter anderem dadurch, dass für eine Außenrückblickspiegelanordnung, die wahlweise mit einem handbetriebenen oder mit einem elektromotorisch betriebenen Verschwenken ausgeführt sein soll, weniger und vor allem kostengünstig herstellbare Bauteile benötigt werden. Hierdurch wird:
- der Entwicklungs-, Herstellungs- und Montageaufwand im Vergleich zum Stand der Technik wesentlich verringert.
- eine zeit- und kostenintensive Verwechslungsgefahr bei der Montage vermieden.
- der für Sonderlösungen benötigte hohe Montageaufwand vermieden.
- ein Verschwenkantrieb mit geringerem Drehmoment benötigt, als bei Sonderlösungen nach dem Stand der Technik vorgesehen. Dies ist dadurch bedingt, dass solche Sonderlösungen bislang grundsätzlich ein handbetriebenes Verschwenken vorsehen und hiervon ausgehend durch zusätzlichen Einbau eines Elektromotors und eines Untersetzungsgetriebes ein elektromotorisch betriebenes Verschwenken verwirklichen. Bei einem handbetriebenen Verschwenken ist hierbei grundsätzlich eine starke und nur unter hohem Kraftaufwand zu überwindende Rasterung vorgesehen, die auch vom Elektromotor überwunden werden muss. Ein erfindungsgemäß vorgesehener Verschwenkantrieb kann eine intern verbaute Rasterung bei Bedarf Ein-und Auskuppeln, so dass ein wesentlich geringeres Antriebsmoment benötigt wird verbunden mit einer geringeren Stromaufnahme, geringeren Kabelquerschnitten, kostengünstigeren Elektronikbauteilen und wesentlich verringertem Betriebsgeräusch.
- ermöglicht, den Verschwenkantrieb unabhängig von der Außenrückblickspiegelanordnung herzustellen. Hierdurch wird der Montageaufwand sowohl für den Verschwenkantrieb, als auch für die Außenrückblickspiegelanordnung verringert, in welche nur noch der fertige, die Gelenkachse umfassende Verschwenkantrieb eingesetzt werden muss.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigen in schematischer Darstellung:
- Fig. 1: eine Ansicht einer Außenrückblickspiegelanordnung von deren in Fahrtrichtung eines Kraftfahrzeugs orientierten Vorderseite her.
- Fig. 2: einen Querschnitt durch eine zum elektromotorisch betriebenen Verschwenken vorgesehene Außenrückblickspiegelanordnung.
- Fig. 3: einen Querschnitt durch eine zum handbetriebenen Verschwenken vorgesehene Außenrückblickspiegelanordnung.
- Fig. 4: einen Hybrid-Spiegelfuß der Außenrückblickspiegelanordnungen aus den Fig. 1 bis 3 in perspektivischer Ansicht.

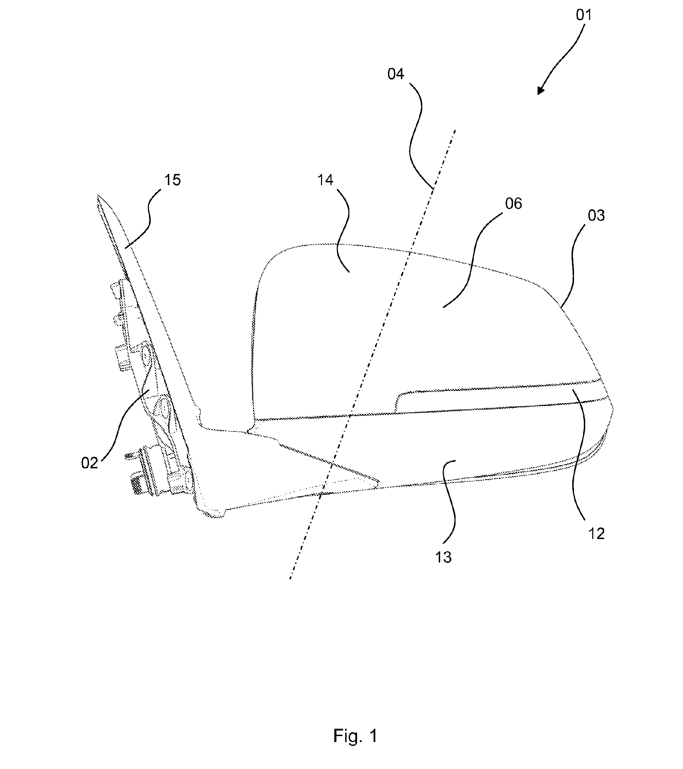

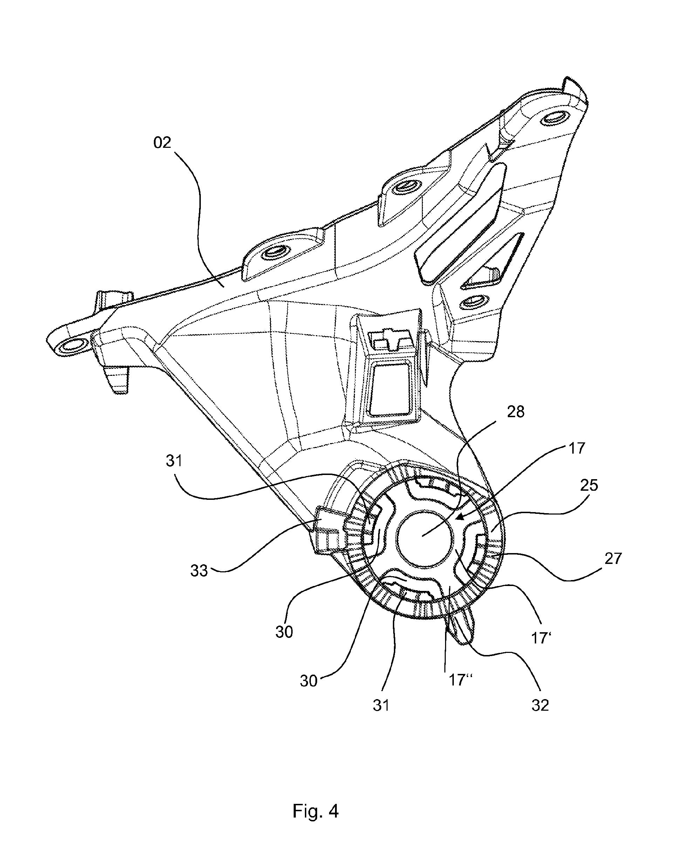

Eine in den Fig. 1 bis 3 ganz oder zum Teil dargestellte Hybrid-Außenrückblickspiegelanordnung 01 für ein Kraftfahrzeug umfasst im Wesentlichen einen im Detail in Fig. 4 dargestellten Hybrid-Spiegelfuß 02 und einen auch als Spiegel kopf bezeichneten Außenrückblickspiegel 03.

Der Spiegelfuß 02 und der Außenrückblickspiegel 03 sind gelenkig miteinander verbunden. Hierbei ist der Außenrückblickspiegel 03 gegenüber dem Spiegelfuß 02 aus einer in Fig. 1 dargestellten Betriebsstellung in eine Anklappstellung und umgekehrt um eine Gelenkachse 04 verschwenkbar.

Der Außenrückblickspiegel 03 umfasst einen Grundträger 05. Der Grundträger 05 ist bevorzugt dem Spiegelfuß 02 zugeordnet. Ebenso umfasst der Außenrückblickspiegel 03 ein Außenrückblickspiegelgehäuse 06, welches unter anderem den Grundträger 05 beherbergt.

Auf dem gegebenenfalls vorgesehenen Grundträger 05 ist eine beispielsweise elektromotorisch betätigbare Verstellanordnung für ein Spiegelglas 07 angeordnet. Die Verstellanordnung wirkt auf eine Trägerplatte 08 ein, auf der das Spiegelglas 07 angeordnet ist. Das Spiegelglas 07 ist mittels einer Klebeverbindung auf der Trägerplatte 08 montiert. Die Trägerplatte 08 ist an der Verstellanordnung und/oder an dem Grundträger 05 geführt und/oder gelagert. Unter dem Begriff Trägerplatte ist hierbei jegliche Art von Träger zu verstehen, der zumindest eine eben oder gewölbt ausgeführte, geschlossene oder gitterförmig unterbrochene, z.B. wabenförmige Trägerfläche aufweist, die geeignet ist, um darauf ein Spiegelglas 07 etwa mittels einer Klebeverbindung oder durch Einklipsen z.B. hinter am Umfang der Trägerfläche hervorstehende und vom Umfang aus gesehen nach Innen zur Mitte der Trägerfläche hin kragende Rastmittel zu befestigen.

Das Außenrückblickspiegelgehäuse 06 weist auf seiner in Betriebsstellung der Fahrtrichtung des Kraftfahrzeugs abgewandten Rückseite eine Öffnung 09 auf, durch welche hindurch das Spiegelglas 07 sichtbar ist bzw. in welcher das Spiegelglas 07 angeordnet ist. Um eine Verstellbarkeit des Spiegelglases 07 zu gewährleisten, ist allseitig zwischen Spiegelglas 07 bzw. Trägerplatte 08 und den die Öffnung 09 umgebenden Wandungen 10 des Außenrückblickspiegelgehäuses 06 ein Abstand eingehalten, so dass sich um das Spiegelglas 07 umlaufend ein Spalt 11 zu den die Öffnung 09 umgebenden Wandungen 10 des Außenrückblickspiegelgehäuses 06 ergibt.

Der Außenrückblickspiegel 03 kann zusätzlich zu oder anstelle einer elektromotorischen Betätigung für die Verstelleinrichtung des Spiegelglases 07 eine oder mehrere weitere elektrische Komponenten beherbergen. Beispiele für solche elektrische Komponenten sind:
- eine Wiederholblinkleuchte 12,
- eine Einstiegsleuchte,
- ein beheizbares Spiegelglas,
- ein elektrochromatisch abblendbares Spiegelglas,
- ein Erfassungs- und/oder Warnanzeigemodul für eine Fahrassistenzvorrichtung, wie etwa eine Totwinkelüberwachung, eine Spurverlasswarnung, eine Annäherungsüberwachung, oder dergleichen,
- einen Sensor zur Erfassung von Fahr- und/oder Umgebungszuständen, wie beispielsweise Temperatur, Helligkeit, Verschmutzungsgrad, Beleuchtungssituation, beispielsweise um das Spiegelglas automatisch zu beheizen und/oder z.B. elektrochromatisch abzublenden.

Darüber hinaus kann der Außenrückblickspiegel 03 eine oder mehrere Kombinationen der beispielhaft angeführten elektrischen Komponenten aufweisen.

Um die Montage beispielsweise der zumindest zum Teil im Inneren des Außenrückblickspiegels 03 angeordneten elektrischen Komponenten zu vereinfachen, ist das Außenrückblickspiegelgehäuse 06 zumindest zweiteilig ausgeführt. Ein erstes Gehäuseteil 13 bildet beispielsweise den Gehäuseboden, ein zweites Gehäuseteil 14 beispielsweise den Gehäusedeckel. Eines der beiden Gehäuseteile umfasst die um die Öffnung 09 für das Spiegelglas 07 herumliegende Gehäusepartie mit den die Öffnung 09 umgebenden Wandungen 10.

Alternativ oder zusätzlich ist ein separater Rahmen vorgesehen, welcher die die auf der Rückseite des Außenrückblickspiegelgehäuses 06 angeordnete Öffnung 10 umgebenden Wandungen 10 umfasst.

Der Spiegelfuß 02 ist darüber hinaus mittels einer Spiegelfußabdeckung 15 verkleidet. Gründe hierfür können beispielsweise ästhetischer Art oder gestalterischer Natur sein und/oder eine Verringerung des Luftwiderstands.

Die elektrischen Komponenten im Außenrückblickspiegel 03 sind mittels einer elektrischen Verbindung durch den Spiegelfuß hindurch mit einer kraftfahrzeugseitigen Stromversorgung und/oder mit einem kraftfahrzeugseitigen Steuergerät beispielsweise über ein Bordnetz und/oder ein Bussystem verbunden. Die elektrische Verbindung besteht beispielsweise aus einem Kabelbaum 16 mit mehreren Kabeln. Der Kabelbaum 16 weist gegebenenfalls jeweils gesonderte Steckverbindungen zum elektrischen Anschluss der elektrischen Komponenten auf. Der Anschluss der elektrischen Komponenten kann dabei jeweils einzeln oder gruppenweise erfolgen. Darüber hinaus verfügt der Kabelbaum 16 über wenigstens eine elektrische Steckverbindung zur weiterführenden elektrischen Kontaktierung kraftfahrzeugseitig.

Die Hybrid-Außenrückblickspiegelanordnung 01 erlaubt unter Verwendung ein und desselben Spiegelfußes 02 entweder ein handbetriebenes oder ein elektromotorisch betriebenes Verschwenken des Außenrückblickspiegels 03 gegenüber dem Spiegelfuß 02 um die Gelenkachse 04 vorzusehen.

Hierzu weist der Spiegelfuß 02 über Mittel 17 zur Aufnahme wahlweise einer die Gelenkachse 04 bildenden Achse 18 oder eines die Gelenkachse 04 umfassenden Verschwenkantriebs 19 auf. Die Achse 18 ist hierbei bei einem handbetriebenen Verschwenken und der Verschwenkantrieb 19 bei einem elektromotorisch betriebenen Verschwenken vorgesehen.

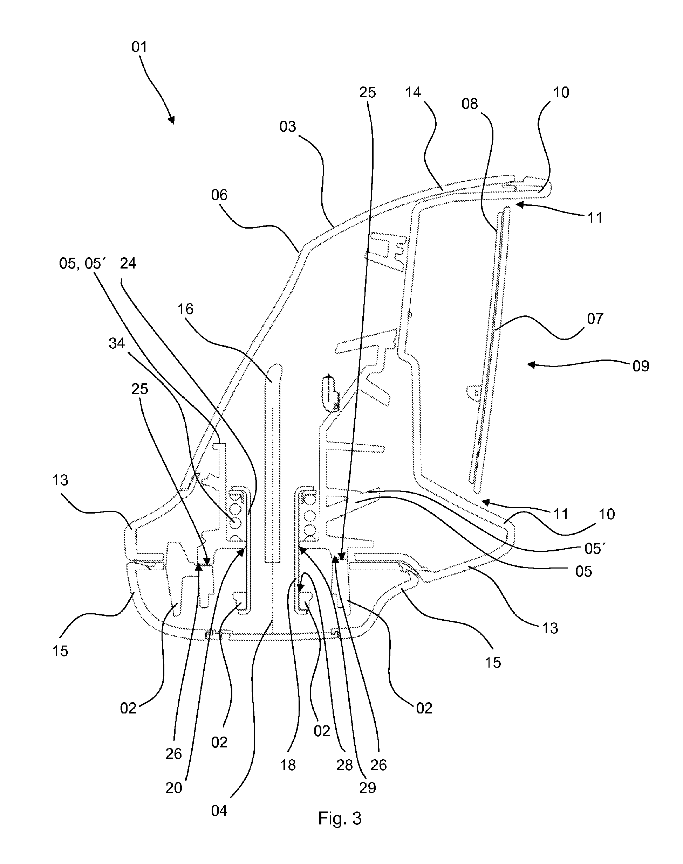

Bei einem handbetriebenen Verschwenken ist hierbei vorzugsweise ein erster Grundträger 05' vorgesehen, der über Mittel 20 verfügt, um eine die Gelenkachse 04 bildende Achse 18 am Außenrückblickspiegel 03 aufzunehmen (Fig. 3). Im Falle einer Ausführung mit handbetriebenem Verschwenken ist die Achse 18 wenigstens mit dem Spiegelfuß 02 oder dem Außenrückblickspiegel 03 um die Gelenkachse 04 verdrehbar verbunden.

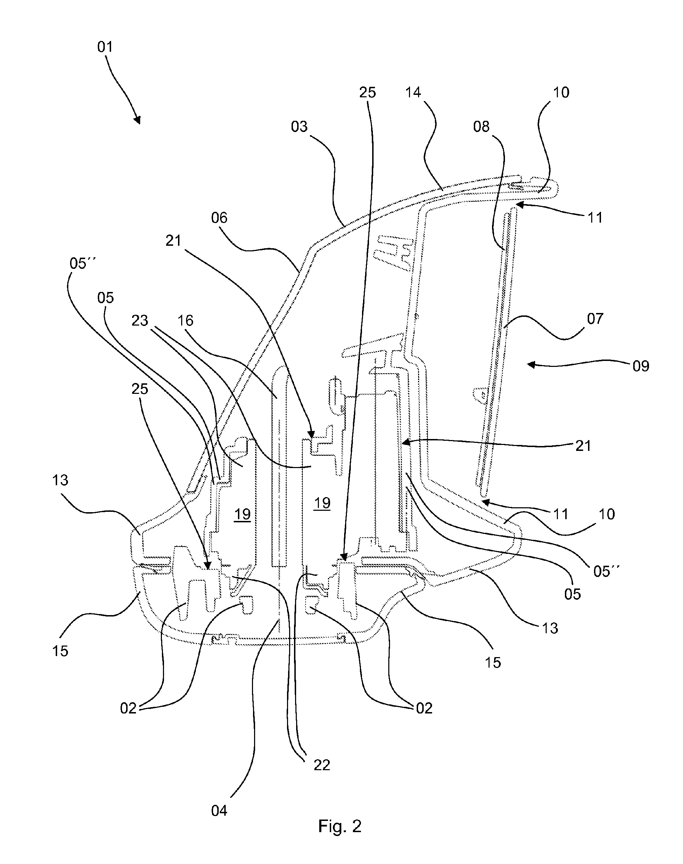

Bei einem elektromotorisch betriebenen Verschwenken ist demgegenüber vorzugsweise ein zweiter Grundträger 05" vorgesehen, der über Mittel 21 verfügt, um einen die Gelenkachse 04 umfassenden Verschwenkantrieb 19 am Außenrückblickspiegel 03 aufzunehmen (Fig. 2). Der Verschwenkantrieb 19 umfasst hierbei vorzugsweise einen ersten Teil 22 und einen zweiten Teil 23. Der erste Teil 22 ist um die Gelenkachse 04 verschwenkbar mit dem zweiten Teil 23 verbunden. Darüber hinaus umfasst der Verschwenkantrieb 19 einen nicht näher dargestellten elektrischen Antrieb zum elektromotorisch betriebenen Verschwenken der Teile 22, 23 relativ zueinander um die Gelenkachse 04. Wenn ein elektromotorisch betriebenes Verschwenken vorgesehen ist, ist der erste Teil 22 des Verschwenkantriebs 19 unverdrehbar am Spiegelfuß 02 und der zweite Teil 23 unverdrehbar am Außenrückblickspiegel 03 aufgenommen.

Der Spiegelfuß 02 ist bei beiden Ausführungsvarianten gleich.

Die bei einem handbetriebenen Verschwenken vorgesehene Achse 18 ist als ein Hohlniet 24 ausgeführt. Eine die Gelenkachse 04 bildende Welle des bei einem elektromotorisch betriebenen Verschwenken vorgesehenen Verschwenkantriebs 19 ist als eine Hohlwelle ausgeführt. Diese Maßnahmen erlauben es, ohne weitere konstruktive Änderungen den Kabelbaum 16 durch die als Hohlwelle ausgeführte Welle des Verschwenkantriebs oder durch die als Hohlniet 24 ausgeführte Achse 18 hindurch zu führen.

Der Spiegelfuß 02 verfügt über eine Gelenkpfanne 25. Ebenfalls verfügt der Außenrückblickspiegel 03, vorzugsweise dessen für ein handbetriebenes Verschwenken vorgesehener Grundträger 05', über eine Gelenkpfanne 26. Die Gelenkpfannen 25, 26 des Spiegelfußes 02 und des Außenrückblickspiegels 03 bzw. des für ein handbetriebenes Verschwenken vorgesehenen Grundträgers 05' sind vorzugsweise einander zugeordnet. Die Gelenkachse 04 steht senkrecht auf den Gelenkpfannen 25, 26 auf.

Der die für ein handbetriebenes Verschwenken vorgesehene Achse 18 bildende Hohlniet 24 ist federbelastet. Die Federbelastung ist vorgesehen sein, um gegebenenfalls in Zusammenwirken mit z.B. an oder in den Gelenkpfannen 25, 26 vorgesehenen, beispielsweise als Erhebungen und Vertiefungen ausgeführten Rasterelementen 27 eine Rasterung zu bilden, welche den Außenrückblickspiegel 03 wenigstens in der Betriebsstellung hält. Die Federbelastung wird durch Beaufschlagung mit einer axial in Richtung des Rasterelementeingriffs wirkenden Feder 34 hergestellt. Die Feder 34 ist in dem Hohlniet 24 eingefangen.

Zumindest die Gelenkpfanne 25 des Spiegelfußes 02 weist zumindest einen Teil der Mittel 17 zur Aufnahme wahlweise einer die Gelenkachse 04 bildenden Achse 18 oder eines die Gelenkachse 04 umfassenden Verschwenkantriebs 19 auf.

Die Gelenkpfanne 26 beispielsweise des für ein handbetriebenes Verschwenken vorgesehenen Grundträgers 05' des Außenrückblickspiegels 03 weist zumindest einen Teil der Mittel 20 zur Aufnahme der die Gelenkachse 04 bildenden Achse 18 am Außenrückblickspiegel 03 auf.

Die Mittel 17 zur wahlweisen Aufnahme der die Gelenkachse 04 bildenden Achse 18 am Spiegelfuß 02 umfassen beispielsweise eine in der Gelenkpfanne 25 des Spiegelfußes 02 angeordnete zentrale Lageröffnung 28 für die Achse 18. Die Mittel 20 zur Aufnahme der die Gelenkachse 04 bildenden Achse 18 am Außenrückblickspiegel 03 umfassen vorzugsweise eine beispielsweise in der am für ein handbetriebenes Verschwenken vorgesehenen Grundträger 05' vorgesehenen Gelenkpfanne 26 des Außenrückblickspiegels 03 angeordnete zentrale Lageröffnung 29 für die Achse 18. Die bei handbetriebenem Verschwenken vorgesehene Achse 18 durchsetzt die beiden Lageröffnungen 28, 29 in den Gelenkpfannen 25, 26 des Spiegelfußes 02 und des für ein handbetriebenes Verschwenken vorgesehenen Grundträgers 05' des Außenrückblickspiegels 03.

Die Mittel 17 zur wahlweisen Aufnahme des die Gelenkachse 04 umfassenden Verschwenkantriebs 19 am Spiegelfuß 02 umfassen wenigstens eine in der Gelenkpfanne 25 des Spiegelfußes 02 angeordnete Ausnehmung 30 mit Mitteln 31 zur Befestigung wenigstens einer Partie des Verschwenkantriebs 19 in der Ausnehmung 30. Bei der in der Ausnehmung 30 befestigbaren Partie des Verschwenkantriebs 19 handelt es sich vorzugsweise um mindestens eine Partie des ersten Teils 22 des Verschwenkantriebs 19. Das Befestigungsmittel 17 bildet in der Ausführungsform der Abbildung 4 ein sternförmige Anordnung, die über radiale Armen 17" einen kreisförmige Fläche 17' innerhalb der der Gelenkpfanne 25 bildet. Dadurch wird für die Verwendung eines Hohlniets einen Befestigungsfläche 17' geschaffen, deren Innendurchmesser 28 dem kleineren Durchmesser des Hohlniets entspricht. Die Befestigungsfläche 17' dient als Lager für den Hohlniet. Sie muss ausreichende Festigkeit und einen ausreichenderadiale Ausdehnung aufweisen. Limitiert ist die Ausdehnung der Fläche 17' durch die Anforderungen an die Befestigung der Schwenkantriebs.

Der Schwenkantrieb dagegen wird mit einem Bajonettverschluss am Spiegelfuß befestigt. Dafür müssen am Antrieb oder an der Trägerplatte vorhandene Vorsprünge durch die Öffnungen 30 des Mittels 17 geschoben werden und unterhalb der Ebenen des Mittels 17 mit Befestigungsmitteln 32 verrastet werden. Die Öffnungen 30 des Mittels 17 müssen so ausgelegt sein, dass die Verrastungsvorrichtung des Antriebs durchgeschoben werden kann. Je nach verwendetem Antrieb oder je nach Spiegeldesign sind also auch weniger als vier Öffnungen oder mehr als vier Öffnungen einsetzbar. Das Mittel 17 reduziert den Durchmesser der Gelenkpfanne 25 dabei um mindestens 50%. Das Mittel 17 wird mit dem Spiegelfuß einteilig aus demselben Material hergestellt, wobei hier Metall oder Kunststoffe zum Einsatz kommen.

Der Spiegelfuß 02 und/oder der Außenrückblickspiegel 03 verfügen darüber hinaus über Anschläge 32, 33, welche zumindest eine Endstellung, vorzugsweise zwei Endstellungen, bei einem Verschwenken des Außenrückblickspiegels 03 gegenüber dem Spiegelfuß 02 definieren. Bei den Endstellungen handelt es sich vorzugsweise um eine An- bzw. Beiklappstellung in und eine An- bzw. Beiklappstellung entgegen der Fahrtrichtung des Kraftfahrzeugs.

Die Erfindung ist insbesondere im Bereich der Herstellung von Außenrückblickspiegelanordnungen für Kraftfahrzeuge gewerblich anwendbar.

### Bezugszeichenliste

- 01: Hybrid-Außenrückblickspiegelanordnung
- 02: Hybrid-Spiegelfuß; Spiegelfuß
- 03: Außenrückblickspiegel
- 04: Gelenkachse
- 05, 05', 05": Grundträger
- 06: Außenrückblickspiegelgehäuse
- 07: Spiegelglas
- 08: Trägerplatte
- 09: Öffnung
- 10: Wandung
- 11: Spalt
- 12: Wiederholblinkleuchte
- 13: erstes Gehäuseteil
- 14: zweites Gehäuseteil
- 15: Spiegelfußabdeckung
- 16: Kabelbaum
- 17: Mittel zur Aufnahme wahlweise einer die Gelenkachse bildenden Achse oder eines die Gelenkachse umfassenden Verschwenkantriebs am Spiegelfuß
- 17': Fläche des Mittels
- 17": Armen des Mittels 17
- 18: Achse
- 19: Verschwenkantrieb
- 20: Mittel zur Aufnahme einer die Gelenkachse bildenden Achse am Außenrückblickspiegel
- 21: Mittel zur Aufnahme eines die Gelenkachse umfassenden Verschwenkantriebs am Außenrückblickspiegel
- 22: erster Teil des Verschwenkantriebs
- 23: zweiter Teil des Verschwenkantriebs
- 24: Hohlniet
- 25: Gelenkpfanne
- 26: Gelenkpfanne
- 27: Rasterelement
- 28: Lageröffnung am Fuß
- 29: Lageröffnung
- 30: Ausnehmung
- 31: Mittel zur Befestigung wenigstens einer Partie des Verschwenkantriebs in der Ausnehmung
- 32: Anschlag
- 33: Anschlag
- 34: Feder

## Patentansprüche

1. Hybrid-Außenrückblickspiegelanordnung (01) für Kraftfahrzeuge, umfassend einen Spiegelfuß (02) und einen Außenrückblickspiegel (03), wobei:
- der Spiegelfuß (02) und der Außenrückblickspiegel (03) gelenkig miteinander verbunden sind, so dass der Außenrückblickspiegel (03) gegenüber dem Spiegelfuß (02) aus einer Betriebsstellung in eine Anklappstellung und umgekehrt um eine Gelenkachse (04) verschwenkbar ist, und
- die Hybrid-Außenrückblickspiegelanordnung (01) unter Verwendung ein und desselben Spiegelfußes (02) entweder ein handbetriebenes oder ein elektromotorisch betriebenes Verschwenken des Außenrückblickspiegels (03) gegenüber dem Spiegelfuß (02) um die Gelenkachse (04) vorzusehen erlaubt,
**dadurch gekennzeichnet,**
**dass** der Spiegelfuß (02) Mittel (17) zur Aufnahme wahlweise einer die Gelenkachse (04) bildenden Achse (18) oder eines die Gelenkachse (04) umfassenden Verschwenkantriebs (19) aufweist, wobei die Achse (18) bei einem handbetriebenen Verschwenken und der Verschwenkantrieb (19) bei einem elektromotorisch betriebenen Verschwenken vorgesehen ist.

2. Hybrid-Außenrückblickspiegelanordnung nach Anspruch 1,
**dadurch gekennzeichnet, dass** der Außenrückblickspiegel (03) einen Grundträger (05, 05', 05") umfasst, wobei
- bei einem handbetriebenen Verschwenken ein erster Grundträger (05') vorgesehen ist, der über Mittel (20) verfügt, um eine die Gelenkachse (04) bildende Achse (18) aufzunehmen, und
- bei einem elektromotorisch betriebenen Verschwenken ein zweiter Grundträger (05") vorgesehen ist, der über Mittel (21) verfügt, um einen die Gelenkachse (04) umfassenden Verschwenkantrieb (19) aufzunehmen.

3. Hybrid-Außenrückblickspiegelanordnung nach Anspruch 1,
**dadurch gekennzeichnet, dass** der Außenrückblickspiegel (03) einen Grundträger (05) umfasst, welcher Mittel zur Aufnahme wahlweise einer die Gelenkachse (04) bildenden Achse (18) oder eines die Gelenkachse (04) umfassenden Verschwenkantriebs (19) aufweist, wobei die Achse (18) bei einem handbetriebenen Verschwenken und der Verschwenkantrieb (19) bei einem elektromotorisch betriebenen Verschwenken vorgesehen ist.

4. Hybrid-Außenrückblickspiegelanordnung nach Anspruch 1, 2 oder 3,
**dadurch gekennzeichnet,**
**dass** im Falle einer Ausführung mit handbetriebenem Verschwenken die Achse (18) wenigstens mit dem Spiegelfuß (02) oder dem Außenrückblickspiegel (03) um die Gelenkachse (04) verdrehbar verbunden ist.

5. Hybrid-Außenrückblickspiegelanordnung nach einem der vorhergehenden Ansprüche,
**dadurch gekennzeichnet,**
**dass** der Spiegelfuß (02) und der Außenrückblickspiegel (03) über einender zugeordnete Gelenkpfannen (25, 26) verfügen, auf denen die Gelenkachse (04) senkrecht aufsteht.

6. Hybrid-Außenrückblickspiegelanordnung nach Anspruch 5,
**dadurch gekennzeichnet,**
**dass** die Gelenkpfanne (25) des Spiegelfußes (02) und/oder des Außenrückblickspiegels (26) zumindest einen Teil der Mittel (17, 20, 21) zur Aufnahme wahlweise einer die Gelenkachse (04) bildenden Achse (18) oder eines die Gelenkachse (04) umfassenden Verschwenkantriebs (19) aufweisen.

7. Hybrid-Außenrückblickspiegelanordnung nach Anspruch 5 oder 6,
**dadurch gekennzeichnet,**
**dass** die Mittel (17) zur wahlweisen Aufnahme der die Gelenkachse (04) bildenden Achse (18) am Spiegelfuß (02) eine in der Gelenkpfanne (25) des Spiegelfußes (02) angeordnete zentrale Lageröffnung (28) für die Achse (18) umfassen und die Mittel (20) zur Aufnahme der die Gelenkachse (04) bildenden Achse (18) am Außenrückblickspiegel (03) eine in der Gelenkpfanne (26) des Außenrückblickspiegels (03) angeordnete zentrale Lageröffnung (29) umfassen, wobei die bei handbetriebenem Verschwenken vorgesehene Achse (18) die beiden Lageröffnungen (28, 29) in den Gelenkpfannen (25, 26) des Spiegelfußes (02) und des Außenrückblickspiegels (03) durchsetzt.

8. Hybrid-Außenrückblickspiegelanordnung nach einem der vorhergehenden Ansprüche,
**dadurch gekennzeichnet,**
**dass** der Verschwenkantrieb (19) einen ersten Teil (22) umfasst, der um die Gelenkachse (04) verschwenkbar mit einem zweiten Teil (23) verbunden ist, sowie einen elektrischen Antrieb zum elektromotorisch betriebenen Verschwenken der Teile (22, 23) relativ zueinander um die Gelenkachse (04), wobei wenn ein elektromotorisch betriebenes Verschwenken vorgesehen ist, der erste Teil (22) des Verschwenkantriebs (19) unverdrehbar am Spiegelfuß (02) und der zweite Teil (23) unverdrehbar am Außenrückblickspiegel (03) aufgenommen ist.

9. Hybrid-Außenrückblickspiegelanordnung nach Anspruch 8,
**dadurch gekennzeichnet,**
**dass** der Verschwenkantrieb (19) eine Kupplung zwischen dem ersten Teil (22) und dem zweiten Teil (23) umfasst, welche bei äußerer Krafteinwirkung eine zum elektromotorisch betätigten Verschwenken der beiden Teile (22, 23) relativ zueinander erforderliche drehmomentschlüssige Kopplung des elektrischen Antriebs mit den beiden Teilen (22, 23) aufhebt, und bei erneutem elektromotorischen Antrieb die drehmomentschlüssige Kopplung wieder herstellt.

10. Hybrid-Außenrückblickspiegelanordnung nach Anspruch 8 oder 9,
**dadurch gekennzeichnet,**
**dass** der am Außenrückblickspiegel (03) aufgenommene zweite Teil (23) des Verschwenkantriebs (19) die der Gelenkpfanne (25) des Spiegelfußes (02) zugeordnete Gelenkpfanne des Außenrückblickspiegels (03) umfasst.

11. Hybrid-Außenrückblickspiegelanordnung nach einem der vorhergehenden Ansprüche,
**dadurch gekennzeichnet,**
**dass** die Mittel (17) zur wahlweisen Aufnahme des die Gelenkachse (04) umfassenden Verschwenkantriebs (19) am Spiegelfuß (02) wenigstens eine in der Gelenkpfanne (25) des Spiegelfußes (02) angeordnete Ausnehmung (30) mit Mitteln (31) zur Befestigung wenigstens einer Partie des Verschwenkantriebs (19) in der Ausnehmung (30) umfassen.

12. Hybrid-Außenrückblickspiegelanordnung nach Anspruch 11,
**dadurch gekennzeichnet,**
**dass** die Mittel (31) zur Befestigung wenigstens einer Partie des Verschwenkantriebs (19) in der Ausnehmung (30) eine Rastverbindung umfassen, welche bevorzugt durch Einführen der wenigstens einen Partie in die zugehörige Ausnehmung (30) gefolgt von einem Verdrehen der Partie um die Gelenkachse (04) herstellbar ist, und welche besonders bevorzugt durch eine Schraub- und/oder Klebeverbindung gesichert ist.

13. Außenrückblickspiegelanordnung nach einem der vorhergehenden Ansprüche,
**dadurch gekennzeichnet,**
**dass** die für das handbetriebene Verschwenken vorgesehene und hierbei die Gelenkachse (04) bildende Achse (18) einen Hohlniet (24) umfasst.

14. Außenrückblickspiegelanordnung nach Anspruch 13,
**dadurch gekennzeichnet,**
**dass** der Hohlniet (24) federbelastet ist.

15. Außenrückblickspiegelanordnung nach einem der vorhergehenden Ansprüche,
**dadurch gekennzeichnet,**
**dass** der Spiegelfuß (02) und/oder der Außenrückblickspiegel (03) über Anschläge (32, 33) verfügen, welche zumindest eine Endstellung bei einem Verschwenken des Außenrückblickspiegels (03) gegenüber dem Spiegelfuß (02) definieren.
